(19) Europäisches Patentamt
European Patent Office
Office européen des brevets

(11) **EP 2 487 491 A1**

(12) **EUROPEAN PATENT APPLICATION**
published in accordance with Art. 153(4) EPC

(43) Date of publication:
**15.08.2012 Bulletin 2012/33**

(51) Int Cl.:
***G01N 35/10*** (2006.01)    ***G01N 1/00*** (2006.01)

(21) Application number: **10821748.0**

(86) International application number:
**PCT/JP2010/005998**

(22) Date of filing: **06.10.2010**

(87) International publication number:
**WO 2011/043073 (14.04.2011 Gazette 2011/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.10.2009 JP 2009235626**

(71) Applicant: **Beckman Coulter, Inc.**
**Brea, CA 92821 (US)**

(72) Inventor: **HAGA, Tadashi**
**Sunto-gun**
**Shizuoka 411-0931 (JP)**

(74) Representative: **Müller-Boré & Partner**
**Patentanwälte**
**Grafinger Straße 2**
**81671 München (DE)**

(54) **DISPENSING DEVICE, ANALYZING DEVICE, AND DISPENSING METHOD**

(57)    A dispenser, analyzer and dispensing method are provided, which can dispense a predetermined amount of a blood cell sample without being influenced by an individual difference of the blood cell sample. The apparatus according to the present invention includes: a pressure sensor measuring pressure within a pipe during liquid suction by a dispensing probe, a calculation section calculating an average pressure value during liquid suction, measured by the pressure sensor; a storage section storing a correlation between the average pressure value and a discharge operation amount during liquid suction for each desired discharge amount; a correction section correcting the discharge operation amount based on the average pressure amount during suction calculated by the calculation section and the correlation stored in the storage section; and a control section controlling a syringe pump based on the discharge operation amount corrected by the correction section to discharge the desired discharge amount.

FIG. 4

```
        preparing diluted
            sample
              │
    ┌──────────────────────┐
    │ sucking predetermined │
    │  amount of blood cell  ├── S201
    │        sample          │
    └──────────────────────┘
              │
    ┌──────────────────────┐
    │ measuring pressure     ├── S202
    │   during suction       │
    └──────────────────────┘
              │
    ┌──────────────────────┐
    │ calculating average    ├── S203
    │   pressure value       │
    └──────────────────────┘
              │
    ┌──────────────────────┐
    │ correcting discharge   ├── S204
    │  operation amount      │
    └──────────────────────┘
              │
    ┌──────────────────────┐
    │ discharging blood cell ├── S205
    │       sample           │
    └──────────────────────┘
              │
    ┌──────────────────────┐
    │  dispensing diluent    ├── S206
    └──────────────────────┘
              │
    ┌──────────────────────┐
    │       stirring         ├── S207
    └──────────────────────┘
              │
           return
```

EP 2 487 491 A1

**Description**

TECHNICAL FIELD

The present invention relates to a dispenser for dispensing a liquid including a sample or reagent; an analyzer comprising the dispenser; and a dispensing method.

BACKGROUND ART

Conventionally, in an analyzer for analyzing a reactant of a sample and a reagent, a dispenser for dispensing a sample or a reagent applies a negative pressure or a positive pressure to dispensing water, which is filled inside a pipe connected to a dispensing probe, using a syringe pump or the like. The dispenser then sucks a sample added with an excess amount in consideration of dilution with the dispensing water from the dispensing probe, and the dispenser discharges a given amount of the sample. The dispensing accuracy of the dispenser has a great influence on the accuracy of analysis performed by using the liquid sample, and therefore, improvement on dispensing accuracy of dispensers is a problem to be solved of extreme importance. Particularly in a case where dispensing of blood cell samples is performed in a blood analyzer, there has been a problem of differences in dispensing amounts among samples because blood cell samples not only have higher viscosity, but also have wider variations in viscosity due to individual differences, compared to blood plasma samples.

For this problem, a dispenser is disclosed for improving dispensing accuracy, where the dispenser comprises a suction and discharge section and a liquid suction mechanism, and the dispenser is capable of measuring pressure of a liquid to be dispensed at the suction by a pressure detecting means, generating discharging pressure by a discharging pressure generating mechanism, and adjusting a discharging amount by a discharging amount adjusting mechanism, and where adjustment of discharging pressure and discharging time based on the pressure at the suction enables accurate dispensing regardless of viscosity of the liquid to be dispensed (see, for example, Patent Literature 1).

[Citation List]

[Patent Literature]

Patent Literature 1: Japanese Laid-Open Publication No. 2005-291998

DISCLOSURE OF THE INVENTION

[Summary of Invention]

[Technical Problem]

In the dispenser described in Patent Literature 1, the discharging amount of liquid is adjusted by adjusting opening and closing time of an on-off valve used as a discharging amount adjusting mechanism. With such an adjustment of discharging amounts with opening and closing time of an on-off valve, however, a dispensing mechanism is prone to cause a malfunction because residual pressure is applied within a pipe. This is not a favorable occurrence. Furthermore, the Patent Literature above describes that a control section controls a pressurizing time by the discharging amount adjusting mechanism, and adjusts discharging pressure at the discharge by the discharging pressure generating mechanism, based on the pressure at the liquid suction. However, there is no disclosure therein with regard to a controlling method of a pressurizing time and discharging pressure of a syringe pump used as the discharging pressure generating mechanism, and the controlling thereof is inferred to be extremely difficult.

The present invention is intended to solve such a problem as described above. It is an objective of the present invention to provide a dispenser, an analyzer, and a dispensing method, in which a given amount of a blood cell sample can be dispensed without an influence of an individual difference in the blood cell sample.

[Solution to Problem]

In order to solve the problem described above and achieve an objective of the present invention, a dispenser according to the present invention applies suction pressure or discharge pressure by pressure generating means through pressurized-out water filled in a pipe connected with a dispensing probe, and sucks and discharges a liquid including a sample or a reagent by a dispensing probe, the dispenser comprising: pressure measuring means for measuring pressure within the pipe during liquid suction by the dispensing probe; calculating means for calculating an average pressure value during liquid suction measured by the pressure measuring means; storage means for storing a correlation between an average pressure value and a discharge operation amount during liquid suction, set for each predetermined discharge amount; correction means for correcting a discharge operation amount of the pressure generating means, based on a correlation stored in the storage means, using the average pressure value during suction calculated by the calculating means; and control means for controlling the pressure generating means to allow a predetermined discharge amount to be discharged from the dispensing probe, based on the discharge operation amount corrected by the correction means.

Alternatively, the present invention provides a dispenser of a liquid including a sample or a reagent, the dispenser comprising: pressure generating means for applying suction pressure or discharge pressure through pressurized-out water filled in a pipe connected with a dispensing probe; a dispensing probe for sucking and discharging a liquid including a sample or a reagent; pressure measuring means for measuring pressure within the pipe during liquid suction by the dispensing probe; calculating means for calculating an average pressure value during liquid suction measured by the pressure measuring means; storage means for storing a correlation between an average pressure value and a discharge operation amount during liquid suction, set for each predetermined discharge amount; correction means for correcting a discharge operation amount of the pressure generating means, based on a correlation stored in the storage means, using the average pressure value during suction calculated by the calculating means; and control means for controlling the pressure generating means to allow a predetermined discharge amount to be discharged from the dispensing probe, based on the discharge operation amount corrected by the correction means.

Further, a dispenser according to the present invention applies suction pressure or discharge pressure by pressure generating means through pressurized-out water filled in a pipe connected with a dispensing probe, and sucks and discharges a liquid including a sample or a reagent by a dispensing probe, the dispenser comprising: pressure generating means for applying suction pressure or discharge pressure through pressurized-out water filled in a pipe connected with a dispensing probe; a dispensing probe for sucking and discharging a liquid including a sample or a reagent; pressure measuring means for measuring pressure within the pipe during liquid suction by the dispensing probe; calculating means for calculating a pressure integral value during liquid suction measured by the pressure measuring means; storage means for storing a correlation between a pressure integral value and a discharge operation amount during liquid suction, set for each predetermined discharge amount; correction means for correcting a discharge operation amount of the pressure generating means, based on a correlation stored in the storage means, using the pressure integral value during suction calculated by the calculating means; and control means for controlling the pressure generating means to discharge a predetermined discharge amount from the dispensing probe, based on the discharge operation amount corrected by the correction means.

Alternatively, the present invention provides a dispenser of a liquid including a sample or a reagent, the dispenser comprising: pressure generating means for applying suction pressure or discharge pressure through pressurized-out water filled in a pipe connected with a dispensing probe; a dispensing probe for sucking and discharging a liquid including a sample or a reagent; pressure measuring means for measuring pressure within the pipe during liquid suction by the dispensing probe; calculating means for calculating a pressure integral value during liquid suction measured by the pressure measuring means; storage means for storing a correlation between a pressure integral value and a discharge operation amount during liquid suction, set for each predetermined discharge amount; correction means for correcting a discharge operation amount of the pressure generating means, based on a correlation stored in the storage means, using the pressure integral value during suction calculated by the calculating means; and control means for controlling the pressure generating means to discharge a predetermined discharge amount from the dispensing probe, based on the discharge operation amount corrected by the correction means.

Further, in one embodiment, in the dispenser according to the present invention, the pressure generating means is a syringe pump in the invention described above.

Further, in another embodiment, in the dispenser according to the present invention, liquid discharging by the dispensing probe is performed at a predetermined discharging rate in the invention described above.

Further, in another embodiment, in the dispenser according to the present invention, the sample is a blood cell sample or a whole blood sample in the invention described above.

Further, in another embodiment, an analyzer according to the present invention analyzes a reactant of a sample and a reagent based on optical measurement, the analyzer using any one of the dispensers described above to dispense a sample or a reagent.

In various embodiments, an apparatus according to the present invention comprises any one or plurality of the characteristics described above of the dispenser according to the present invention.

Further, a dispensing method according to the present invention is for a dispenser that applies suction pressure or discharge pressure by pressure generating means through pressurized-out water filled within a pipe connected to a dispensing probe, sucks and discharges a liquid including a sample or a reagent by the dispensing probe, the method comprising: a pressure measuring step of measuring pressure within the pipe during liquid suction by the dispensing probe; a calculating step of calculating an average pressure value during liquid suction measured at the pressure measuring step; a correcting step of correcting a discharge operation amount of the pressure generating means, using the average pressure value during suction calculated at the calculating step, based on a correlation between an average pressure value and a discharge operation amount, set for each predetermined discharge amount, stored in storage means; and a discharge step of controlling the pressure generating means and allowing a predetermined discharge amount to be discharged from the dispensing probe, based on the discharge operation amount corrected at the correcting step.

Further, a dispensing method according to the present invention is for a dispenser that applies suction pressure or discharge pressure by pressure generating means through pressurized-out water filled within a pipe connected to a dispensing probe, and sucks and discharges a liquid including a sample or a reagent by the dispensing probe, the method comprising: a pressure measuring step of measuring pressure within the pipe during liquid suction by the dispensing probe; a calculating step of calculating a pressure integral value during liquid suction measured at the pressure measuring step; a correcting step of correcting a discharge operation amount of the pressure generating means, using the pressure integral value during suction calculated at the calculating step, based on a correlation between a pressure integral value and a discharge operation amount, set for each predetermined discharge amount, stored in storage means; and a discharge step of controlling the pressure generating means and allowing a predetermined discharge amount to be discharged from the dispensing probe, based on the discharge operation amount corrected at the correcting step.

In various embodiments, a method according to the present invention comprises any one or plurality of the characteristics described above of the dispenser according to the present invention.

Alternatively, the present invention provides a control program used in a dispensing method for a dispenser that applies suction pressure or discharge pressure by pressure generating means through pressurized-out water filled within a pipe connected to a dispensing probe, and sucks and discharges a liquid including a sample or a reagent by the dispensing probe. The control program is for implementing processing executed by the dispenser in accordance with an instruction from an operator, the dispenser comprising a storage section that stores a plurality of sets of a series of executive processing procedures executed by the dispenser, and each plurality of sets of a series of executive processing procedures corresponding to a series of operation procedures by the operator, the dispensing method comprising: a pressure measuring step of measuring pressure within the pipe during liquid suction by the dispensing probe; a calculating step of calculating an average pressure value during liquid suction measured at the pressure measuring step; a correcting step of correcting a discharge operation amount of the pressure generating means, using the average pressure value during suction calculated at the calculating step, based on a correlation between an average pressure value and a discharge operation amount, set for each predetermined discharge amount, stored in storage means; and a discharge step of controlling the pressure generating means and allowing a predetermined discharge amount to be discharged from the dispensing probe, based on the discharge operation amount corrected at the correcting step.

Alternatively, the present invention provides a control program used in a dispensing method for a dispenser that applies suction pressure or discharge pressure by pressure generating means through pressurized-out water filled within a pipe connected to a dispensing probe, and sucks and discharges a liquid including a sample or a reagent by the dispensing probe, the control program being for implementing processing executed by the dispenser in accordance with an instruction from an operator, the dispenser comprising a storage section that stores a plurality of sets of a series of executive processing procedures executed by the dispenser, and each plurality of sets of a series of executive processing procedures corresponding to a series of operation procedures by the operator, the dispensing method comprising: a pressure measuring step of measuring pressure within the pipe during liquid suction by the dispensing probe; a calculating step of calculating a pressure integral value during liquid suction measured at the pressure measuring step; a correcting step of correcting a discharge operation amount of the pressure generating means using the pressure integral value during suction calculated at the calculating step, based on a correlation between a pressure integral value and a discharge operation amount, set for each predetermined discharge amount, stored in storage means; and a discharge step of controlling the pressure generating means and allowing a predetermined discharge amount to be discharged from the dispensing probe, based on the discharge operation amount corrected at the correcting step.

In various embodiments, a program according to the present invention comprises any one or plurality of the characteristics described above of the dispenser and method according to the present invention.

Alternatively, the present invention provides a computer-readable recording medium for recording a control program used in a dispensing method for a dispenser that applies suction pressure or discharge pressure by pressure generating means through pressurized-out water filled within a pipe connected to a dispensing probe, and sucks and discharges a liquid including a sample or a reagent by the dispensing probe, the control program being for implementing processing executed by the dispenser in accordance with an instruction from an operator, the dispenser comprising a storage section that stores a plurality of sets of a series of executive processing procedures executed by the dispenser, and each plurality of sets of a series of executive processing procedures corresponding to a series of operation procedures by the operator, the dispensing method comprising: a pressure measuring step of measuring pressure within the pipe during liquid suction by the dispensing probe; a calculating step of calculating an average pressure value during liquid suction measured at the pressure measuring step; a correcting step of correcting a discharge operation amount of the pressure generating means, using the average pressure value during suction calculated at the calculating step, based on a correlation between an average pressure value and a discharge operation amount, set for each predetermined discharge amount, stored in storage means; and a discharge step of controlling the pressure generating means and allowing a predetermined discharge amount to be discharged from the dispensing probe, based on the discharge operation amount corrected at the correcting step.

Alternatively, the present invention provides a computer-readable recording medium for recording a control program used in a dispensing method for a dispenser that applies suction pressure or discharge pressure by pressure generating meansthrough pressurized-out water filled within a pipe connected to a dispensing probe, and sucks and discharges a liquid including a sample or a reagent by the dispensing probe, the control program being for implementing processing executed by the dispenser in accordance with an instruction from an operator, the dispenser comprising a storage section that stores a plurality of sets of a series of executive processing procedures executed by the dispenser, and each plurality of sets of a series of executive processing procedures corresponding to a series of operation procedures by the operator, the dispensing method comprising: a pressure measuring step of measuring pressure within the pipe during liquid suction by the dispensing probe; a calculating step of calculating a pressure integral value during liquid suction measured at the pressure measuring step; a correcting step of correcting a discharge operation amount of the pressure generating means using the pressure integral value during suction calculated at the calculating step, based on a correlation between a pressure integral value and a discharge operation amount, set for each predetermined discharge amount, stored in storage means; and a discharge step of controlling the pressure generating means and allowing a predetermined discharge amount to be discharged from the dispensing probe, based on the discharge operation amount corrected at the correcting step.

In various embodiments, a recording medium according to the present invention comprises any one or plurality of the characteristics described above of the dispenser, method and program according to the present invention.

[Advantageous Effects of Invention]

In the present invention, the calculating means calculates an average pressure value from in-line pressure data during liquid suction measured by the pressure measuring means; the correction means corrects a discharge operation amount of the pressure generating means, for discharging a predetermined discharge amount, based on a correlation between an average pressure value and a discharge operation amount during liquid suction at a desired discharge amount stored in storage means; and the control means controls the pressure generating means based on the discharge operation amount to allow a predetermined discharge amount to be discharged from the dispensing probe. Therefore, the present invention exerts an effect of being able to dispense a predetermined amount of a sample regardless of individual differences (high or low viscosity) of blood cell samples, thereby obtaining a stable analysis result.

BRIEF DESCRIPTION OF THE DRAWINGS

Figure **1** is a schematic view of an analyzer according to an embodiment of the present invention.

Figure **2** is a schematic view of a sample dispensing mechanism.

Figure **3** is a flowchart of processing for dispensing a blood cell sample.

Figure **4** is a flowchart of processing for preparing a diluted sample of a blood cell sample.

Figure **5** is a graph illustrating a relationship between a pressure waveform and time during sample suction of blood cell samples of different viscosities.

Figure **6** is a graph illustrating a relationship between a discharge operation amount and a pressure average during suction.

Figure **7** is a graph illustrating a relationship between a discharge operation amount and an actual discharge amount (with a sample with a pressure sensor output average during suction of 0.8 V).

Figure **8** is a schematic view of an analyzer according to a variation example of an embodiment according to the present invention.

Figure **9** is a graph illustrating a relationship between a discharge operation amount and a suction pressure integral value in a variation example of an embodiment according to the present invention.

BEST MODE FOR CARRYING OUT THE INVENTION

Hereinafter, a preferred embodiment of the dispenser, analyzer and dispensing method according to the present invention will be described in detail with reference to the attached drawings. It should be noted that the present invention is not necessarily limited to these embodiments. Various modifications can be applied to the present invention within the scope that does not depart from the gist of the present invention. In addition, with regard to the description of the drawings, identical portions are added with the same reference numerals. Also, the "liquid" in the present specification includes colloidal solutions, such as whole blood, as well as dispersed particles, such as blood cells.

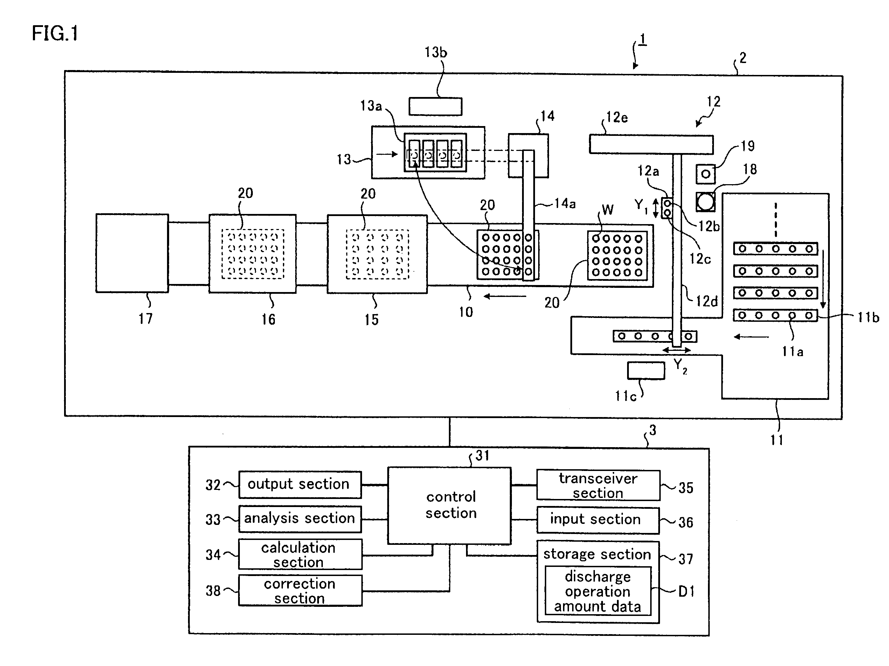

Figure **1** is a schematic view illustrating a structure of an analyzer according to the present embodiment. As illustrated in Figure **1,** an analyzer 1 according to the present embodiment comprises: a measurement mechanism **2** for dispensing a sample and a reagent to be analyzed, respectively in a given well **W** (reaction container) of a microplate **20** to optically measure a reaction caused in the well **W**; and a control mechanism **3** for controlling the overall analyzer **1** including the measurement mechanism **2** and for analyzing a measurement result by the measurement mechanism **2**. The analyzer **1** automatically performs an immunological analysis on a plurality of samples with the two mechanisms in cooperation with each other. The microplate **20** is a plate which is formed with a transparent material, such as acrylic, and has a large number of holes, referred to as a well **W,** opened on the surface of the microplate. The wells **W** house a sample, each of which is a hole with an inclined plane formed therein. The wells **W** are arranged in a matrix on the surface of the microplate **20**.

The measurement mechanism **2** broadly comprises: a plate conveying lane **10**; a sample transfer section **11**; a sample dispensing mechanism **12**; a reagent transfer section **13**; a reagent dispensing mechanism **14**; a reaction promoting section **15**; a photometry section **16**; a plate collecting section **17**; a sample diluting section **18**; and a probe washing section **19**. The control mechanism **3** comprises: a control section **31**; an output section **32**; an analysis section **33;** a calculation section **34;** a transceiver section **35;** an input section **36;** a storage section **37** and a correction section **38**. Each of the sections comprised in the measurement mechanism **2** and control mechanism **3** is electrically connected with the control section **31**.

The plate conveying lane **10** conveys the microplate **20** to a given position in order to dispense a sample or a reagent to each well **W** in the microplate **20** and to promote a reaction, and perform photometry, on a liquid in the well **W**. Under the control by the control section **31,** and by the driving of a drive mechanism (not shown), the plate conveying lane **10** conveys the microplate **20** in the direction towards the left, for example, as indicated by the arrow in Figure **1.**

The sample transfer section **11** comprises a plurality of sample racks **11b,** each of which retains a plurality of sample containers **11a** housing a sample and which are successively transferred in the direction of the arrow in the figure. Samples housed in the sample containers **11a** are obtained from blood collected from a donor of the samples, which have been added with an anticoagulant and centrifuged to be separated into a supernatant, or blood plasma, and a sediment, or blood cell (red blood cell) particles. The samples in the sample containers **11a** transferred to a given position on the sample transfer section **11** are dispensed by sample dispensing mechanism **12** into given wells **W** of a microplate **20** arranged and conveyed on the plate conveying lane **10**.

A recording medium is attached to a side portion of the sample container **11a,** and the recording medium records sample information on the sample housed in the sample container **11a**. The recording medium displays various kinds of encoded information, which is optically read. The sample information includes, for example, name, sex, and age of a patient who provided the sample, categories of analysis, and the like.

A corresponding portion of the sample transfer section 11 is provided with a sample reading section **11c** for optically reading the recording medium. The sample reading section **11c** emits infrared ray or visible light to the recording medium and processes reflected light from the recording medium to read information of the recording medium. The sample reading section **11c** may also capture and process an image of the recording medium, decode image information obtained by the capturing and processing, and obtain information of the recording medium. The sample reading section **11c** reads the information of the recording medium attached to the sample container **11a** as it passes in front of the sample reading section **11c.**

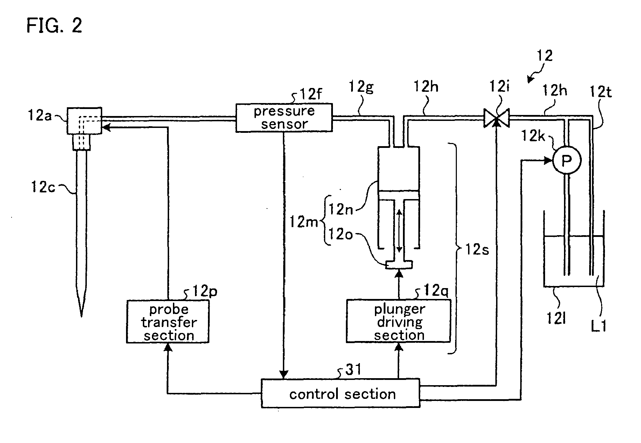

The sample dispensing mechanism **12** comprises: dispensing probes **12b** and **12c** for sucking and discharging a sample; a probe retaining section **12a** for retaining the dispensing probes **12b** and **12c;** an arm **12d** for movably supporting the probe retaining section **12a** in the direction of the arrow $Y_1$ in Figure 1; and an arm retaining section **12e** for movably supporting a base end portion of the arm **12d** in the direction of the arrow $Y_2$. The dispensing probes **12b** and **12c** are each a dispensing probe for dispensing a blood plasma or blood cell sample. The dispensing probes **12b** and **12c** are transferred to above a sample container **11a** by a probe transfer section **12p** illustrated in Figure **2,** and they are lowered into a supernatant, or blood plasma, within the sample container **11a**. Then, the dispensing probe **12b** sucks the blood plasma sample, and the dispensing probes **12b** and **12c** are further lowered into the lower layer of blood cells, so that the dispensing probe **12c** sucks the blood cell sample. The sucked blood plasma sample is discharged into a given well **W** of a microplate **20,** while the blood cell sample is discharged into the sample diluting section **18** to prepare a diluted sample. In the sample diluting section **18,** a diluent is dispensed by a diluent nozzle (not shown), and a diluted sample of the blood cell sample is prepared. The dispensing probe **12c** is washed by the dispensing probe washing section **19,** and then the diluted sample is sucked from the sample diluting section **18** and discharged into a given well **W** of a microplate **20.**

The reagent transfer section **13** transfers a reagent set **13a,** which houses reagents that are to be dispensed in respective wells **W** in a microplate **20,** to a reagent suction position by the reagent dispensing mechanism **14.** Required reagents are housed in respective given amounts in the reagent set **13a** in accordance with various types of categories of analysis. Each of the reagents contained in one reagent set **13a** may be used for a given number of times of dispensing, or may be used for a one time dispensing. The reagent transfer section **13** collects a reagent set **13a** which is finished with a given number of times of dispensing processes, and transfers another reagent set **13a** to be dispensed next.

A recording medium on which reagent information regarding various reagents housed in the reagent set **13a** is recorded, is attached on a side surface portion of the reagent set **13a.** The recording medium displays various types of encoded information, which is optically read. A reagent reading section **13b** for optically reading the recording medium is provided at a corresponding portion of the reagent transfer section **13.** The reagent reading section **13b** emits inf rared ray or visible ray to the recording medium and process a reflection light from the recording medium to read out the information of the recording medium. Alternatively, the reagent reading section **13b** may perform image-capturing processing on the recording medium, decode image information obtained by the image-capturing processing, and obtain information on the recording medium.

The reagent dispensing mechanism **14** comprises an arm **14a,** and a probe for sucking and discharging a reagent is attached to a tip portion of the arm **14a.** The arm **14a** freely performs ascent and descent in a vertical direction as well as a rotation with a vertical line along a base end portion of the arm itself as the central axis. The reagent dispensing mechanism **14** comprises a suction and discharge syringe or a suction and discharge mechanism using a piezoelectric element (not shown). The reagent dispensing mechanism **14** sucks a reagent in a reagent set **13a,** which is moved to a given position on the reagent transfer section **13,** using each probe; swivels the arm **14a** counterclockwise in the figure; and discharges each reagent that corresponds to each well **W** of a microplate **20** conveyed to a given position on the plate conveying lane **10** to perform dispensation.

The reactionpromoting section **15** promotes a reaction of a sample with a reagent dispensed in a microplate **20,** performs an antigen-antibody-reaction, and forms an agglutination pattern on a bottom surface of each well **W** of the microplate **20.** The reaction promoting section **15** stirs the sample and reagent in the well **W** by vibrating the microplate **20.** Furthermore, the reaction promoting section **15** settles the microplate **20** still foragivenperiodof time in accordance with the content of the analysis method, for example, to promote natural precipitation or the like of blood cell particles. Furthermore, the reaction promoting section **15** manipulates minute particles present in the well **W** by, for example, applying a given magnetic field.

The photometry section **16** photometrically detects the agglutination pattern formed in the well **W.** The photometry section **16** is configured with, for example, a CCD camera, and the photometry section **16** captures an image of each well **W** on the microplate **20** from the above to output image information of a captured image of the agglutination pattern formed in each well **W.** The photometry section **16** may also comprise: a light emitting section for irradiating a given light to each well **W** of the microplate **20;** and a light receiving section for receiving light occurred from a suspected fluid in each well **W,** and may output the brightness of the light occurred from the suspected fluid as a photometric result.

Theplate collecting section **17** collects a microplate **20** that has completed the photometric processing by the photometry section **16.** The collected microplate **20** is washed by a washing section (not shown) through suction and discharge of a mixture liquid in each well **W,** and injection and suction of a washing liquid. The washed microplate **20** is reused. Depending on the test item, the microplate **20** may be disposed of after a completion of a measurement.

Next, the control mechanism **3** will be described. The control section **31** is configured with a CPU and the like, and controls the processing and movement of each section of the analyzer **1.** The control section **31** performs a given input and output control on information which is input to and output from these constituents. The control section **31** also performs given information processing on the information.

The output section **32** is configured with a display, a printer, a speaker and the like, and the output section **32** outputs various types of information including analysis information generated by the analysis section **33.**

The analysis section **33** analyzes an antigen-antibody-reaction based on a photometric result measured by the photometry section **16.** When the photometry section **16** outputs image information, the analysis section **33** processes the image information output by the photometry section **16** and obtains a photometric value in accordance with the brightness of a sample. The analysis section **33** also calculates parameters, such as SPC (clearness of the edge of an image at the center portion), P (brightness of a peripheral portion), C (brightness of the center portion) and LIA (area of an image at the center portion), used for determination of negative or positive of agglutination reactions, and compares the parameters with threshold values of respective parameters, such as SPC, P, C and LIA, stored in the storage section **37.** The parameters of SPC, P and C are obtained from the values of 0 to 99, and the parameter of LIA is obtained from the values of 0 to 999. From a comparison of the numerical value of the calculated parameter and the threshold value of the parameter, it is possible to determine either of + (positive), - (negative) or ? (undetermined; a case where the comparison result is in between the positive and negative and it is not possible to determine either of the two) for each well **W.**

The transceiver section **35** has a function as an interface for performing transmission and reception of information in accordance to a given format via a communication network (not shown). The input section **36** is configured with a keyboard, a mouse, a microphone or the like, for obtaining, from the outside, various types of information necessary for an analysis of a sample, instruction information for analysis movements, and the like. The input section **36** also outputs to the control section **31** an extraction menu for a screen display.

The storage section **37** is configured with: a hard disk for magnetically storing information; and a memory for loading and electrically storing various types of programs from the hard disk when the analyzer **1** executes some processing, which programs are associated with the processing. The storage section **37** may comprise an auxiliary storage device capable of reading information stored on a storage medium, such as a CD-ROM, a DVD-ROM and a PC card. The storage section **37** also has a discharge operation amount data **D1**. The discharge operation amount data **D1** represents a correlation between an average pressure value and a discharge operation amount during liquid suction at a sample dispensing mechanism **12,** and the data **D1** is set for each discharge set amount. The discharge operation amount data **D1** is obtained from a relationship between an actual discharge amount from a dispensing probe and a discharge operation amount of a pressure generating means including a syringe pump **12s** to be described later, and the like, when liquids with different viscosities are discharged by a dispensing probe **12c** for dispensing a blood cell sample. In the present specification, the discharge operation amount means a product of a plunger travel distance and a cross-sectional area of a columnar portion of a cylinder of a syringe pump **12s** (see Figure **2)** used as a pressure generating means.

The calculation section **34** calculates an average value of in-line pressures during suction of a blood cell sample by the dispensing probe **12c,** in-line pressures of which are measured by a pressure sensor **12f** (see Figure **2)** that the sample dispensing mechanism **12** comprises.

The correction section **38** corrects a discharge operation amount of a plunger driving section **12q** for discharging a given discharge amount, using an average pressure amount during suction of a blood cell sample, which is calculated by the calculation section **34,** and based on the discharge operation amount data **D1** stored in the storage section **37.** So as to allow the syringe pump **12s** to operate for the discharge operation amount corrected by the correction section **38,** the control section **31** transmits a control signal to the plunger driving section **12q** and allows a desired discharge amount to be discharged from the dispensing probe **12c.**

In the analyzer **1** configured as described above, the sample dispensing mechanism **12** dispenses the sample in the sample container **11a,** and the reagent dispensing mechanism **14** dispenses each reagent in the reagent set **13a,** to aplurality of microplates **20** that are successively conveyed. Then, the photometry section **16** performs brightness measurement of a sample in which the sample has reacted with a reagent, and the analysis section **33** analyzes this measurement result. As a result, analysis on the antigen-antibody-reaction of the sample and the like are automatically performed.

Next, processing for dispensing a blood cell sample will be described with reference to Figures **2** to **6.** Figure **2** is a schematic view of a sample dispensing mechanism **12.** In Figure **2,** the dispensing probe **12b,** arm **12d** and arm retaining section **12e** for dispensing a blood plasma sample are omitted for the simplicity of the description.

As illustrated in Figure **2,** the sample dispensing mechanism **12** broadly comprises: a dispensing probe **12c**; a pressure sensor **12f**; a liquid sending pump **12k;** a tank **121;** a probe transportation section **12p;** and a syringe pump **12s.**

An end of a pipe **12g** is connected to a base end of the dispensing probe **12c.** The other end of the pipe **12g** is connected to a syringe **12m.** Furthermore, a pressure sensor **12f** is positioned in the middle of the pipe **12g,** and the pressure sensor **12f** converts the pressure within the pipe **12g** into voltage and outputs the voltage. The syringe **12m** comprises: a tube-shaped cylinder **12n,** to which the other end of the pipe **12g** is connected; and a plunger **12o** provided to be capable of moving back and forth within the cylinder **12n** while sliding the inner wall surface of the cylinder **12n.** The plunger **12o** is connected with the plunger driving section **12q.** The syringe pump **12s** is constituted of the cylinder **12n,** plunger **12o** and plunger driving section **12q** described above. The plunger driving section **12q** is configured with, for example, a linear motor and performs the back and forth movement of the plunger **12o** with respect to the cylinder **12n.** An end of a pipe **12h is** connected with the cylinder **12n** of the syringe **12m.** The other end of the pipe **12h** is connected with the tank **121** for housing pressurized-out water **L1.** In addition, an electromagnetic valve **12i** and a liquid sending pump **12k** are connected in the middle of the pipe **12h.** For the pressurized-out water **L1,** an incompressible fluid, such as distilled water or degassed water, is used. The pressurized-out water **L1** is also used as a washing liquid for washing the inside of the dispensing probe **12c.**

The sample dispensing mechanism **12** drives the liquid sending pump **12k** and opens the electromagnetic valve **12i,** so that the pressurized-out water **L1** housed in the tank **121** can be filled in the cylinder **12n** through the pipe **12h** and further be filled up to the tip of the dispensing probe **12c** through the pipe **12g** from the cylinder **12n.** In such a state where the pressurized-out water **L1** is filled to the tip of the dispensing probe **12c** as described above, the electromagnetic valve **12i** is closed and the pressurized-out water **L1** sent by the pump **12k** is allowed to be circulated back to the tank **121** through a reverse pipe **12t.** When a blood cell sample is sucked, the plunger driving section **12q** is driven to move the plunger **12o** backward with respect to the cylinder **12n,** so that suction pressure will be applied to the tip portion of the dispensing probe **12c** through the pressurized-out water **L1** and the blood cell sample will be sucked due to this suction pressure. On the other hand, when a blood cell sample is discharged, the plunger driving section **12q** is driven to move the plunger **12o** forward with respect to the cylinder **12n,** so that discharge pressure will be applied to the tip portion of the dispensing probe **12c** through the pressurized-out water **L1** and the blood cell sample will be discharged due to this discharge pressure.

Although not clearly illustrated in the figure, the sample dispensing mechanism **12** has liquid level detecting functions for detecting a blood plasma-blood cell interface and a liquid level of a sample in a sample container **11a.** The liquid level detecting functions include, for example, a function for detecting a liquid level and an interface from the change in an impedance in between the dispensing probes **12b** and **12c** when the dispensing probes **12b** and **12c** make a contact with a sample.

The control section **31** controls the probe transfer section **12p** so as to transfer the dispensing probe **12c** to a sample suction position, a sample discharge position, a diluted sample suction position and a dispensing probe washing position; and the control section **31** controls the opening and closing of the electromagnetic valve **12i** and the driving of the liquid sending pump **12k** so as to fill the pressurized-out water **L1** into the pipes **12h** and **12g** and dispensing probe **12c.** Further, the control section **31** controls the driving of the plunger driving section **12q** so as to suck and discharge a blood cell sample through the dispensing probe **12c.** In the present embodiment, the control section **31,** which the control mechanism of the analyzer **1** comprises, controls each element of the sample dispensing mechanism **12,** a control mechanism for controlling each element of the sample dispensing mechanism **12** may be provided within the sample dispensing mechanism **12.**

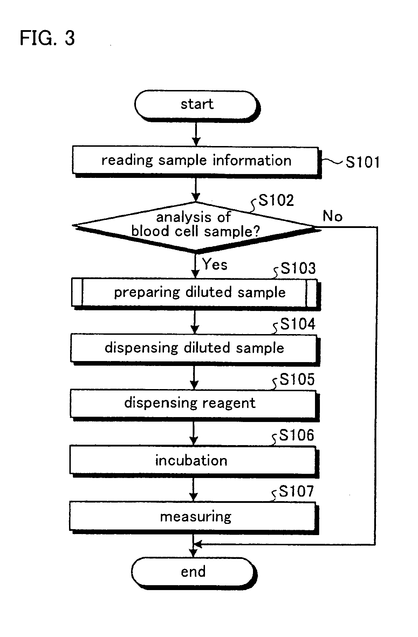

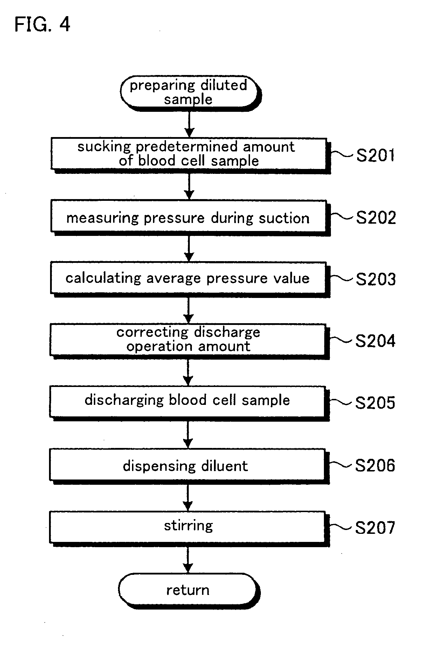

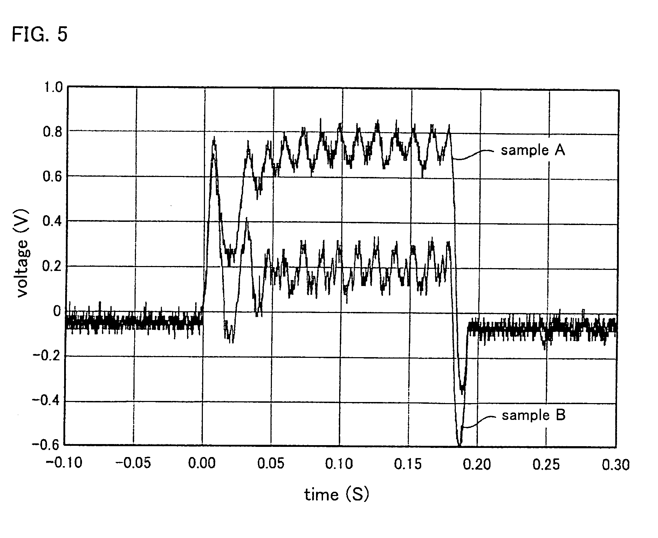

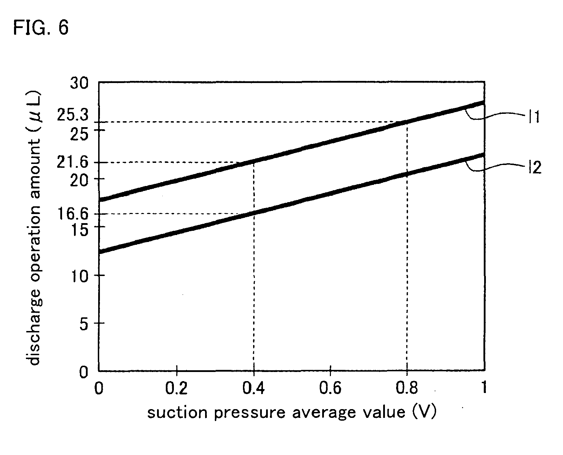

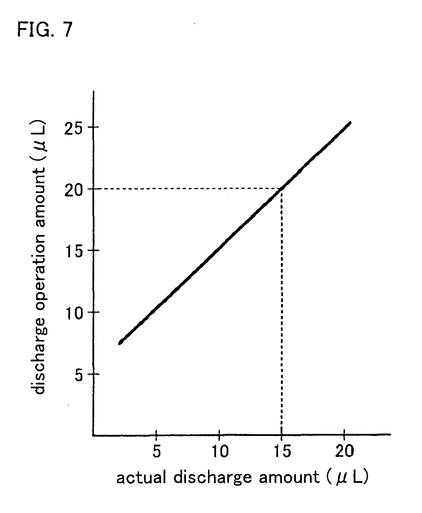

Next, with reference to Figures **3** to **7,** processing for analyzing a blood cell sample will be described. Figure **3** is a flowchart of processing for analyzing a blood cell sample. Figure **4** is a flowchart of processing for preparing a diluted sample with a blood cell sample. Figure **5** is a graph illustrating a relationship between a pressure waveform and time during sample suction of blood cell samples **A** and **B** of different viscosities. Figure **6** is a graph illustrating a relationship between a discharge operation amount and a pressure average during suction. Figure **7** is a graph illustrating a relationship between a discharge operation amount and an actual discharge amount with regard to a sample **A** with a pressure average during sample suction of 0. 8V in a converted voltage value.

First, the sample reading section **11c** reads out sample information, such as a test item, from the recording medium attached to a sample container **11a** to be analyzed, and sends the sample information to the control section **31** (step **S101).** The control section **31** checks whether or not a test item for a blood cell sample has been ordered, based on the sent sample information (step **S102).** If the analysis has not been ordered for the blood cell sample (step **S102:** No), processing for analyzing the blood cell sample is ended. If the analysis has been ordered for the blood cell sample (step **S102:** Yes), the control section **31** controls the processing so that a diluted sample of the blood cell sample is prepared at the sample diluting section **18** (step **S103).** After the preparation of the diluted sample, the diluted sample is sucked through the dispensing probe **12c** that performs the dispensing of the blood cell sample, and the diluted sample is discharged into a well **W** in the microplate **20** for dispensing (step **S104).** Thereafter, a reagent is dispensed by the reagent dispensing mechanism **14** into the well **W** in which the diluted sample has been dispensed (step **S105),** a reaction thereof is promoted by the reaction promoting section **15** (step **S106),** and the photometry section **16** photometrically detects a agglutination pattern in the well **W** (step **S107),** and the processing for analyzing the blood cell sample ends. Note that the dispensing of the diluted sample at the step **S104** described above may be performed without the correction of the discharge operation amount based on the pressure average during the suction of the diluted sample, or the dispensing may be performed with the correction of the discharge operation amount to be described later.

For the processing for diluting the sample at the step **S103,** first, the plunger **12o** is moved backwards with respect to the cylinder **12n** by the driving of the plunger driving section **12q** under the control by the control section **31,** so that the dispensing probe **12c** sucks the blood cell sample in the lower layer component housed in the sample container **11a** (step **S201).** The amount of the sample sucked is an amount set for preparing a diluted sample added with an excess sample amount. For example, if an excess sample amount is 10 $\mu$L and a predetermined sample amount is 20 $\mu$L, then 30 $\mu$L is sucked. While the excess sample amount is normally set in consideration of the sample diluted due to pressurized-out water or the like, the sample amount to be excessively sucked in the present embodiment is set in consideration of reliably sucking a predetermined amount of sample required for analysis.

The pressure sensor **12f** measures a pressure within the pipe **12g** during the suction of the blood cell sample (step **S202),** and sends the pressure, as a pressure signal (voltage), to the control section **31.** Figure **5** is a graph illustrating a relationship between a pressure and time during sample suction of blood cell samples **A** and **B** of different viscosities, in which the suction of a blood cell sample is performed by the syringe pump **12s** during the time from 0.00 second to 0.19 second. As illustrated in Figure **5,** the pressure during suction is high with the blood cell sample **A** having higher viscosity, whereas the pressure during suction is lower with the blood cell sample **B** having low viscosity. Due to large differences in the pressure during suction depending on blood cell samples, the amount sucked into the dispensing probe **12c** will be different even if the suction is performed by the same syringe pump **12s** and at the same suction operation amount. Furthermore, the amount of the sample discharged from the dispensing probe **12c** will be different even if the discharging is performed by the same syringe pump **12s** and at the same discharge operation amount. Thus, in the present embodiment, the average of pressures at the suction of blood cell samples is obtained, and the average of pressures at the suction is used to correct to a discharge operation amount, which allows a predetermined sample amount to be discharged.

The calculation section **34** calculates an average pressure value during sample suction, based on pressure signal data, shown in Figure **5,** obtained through the control section **31** (step **S203).**

The correction section **38** corrects a discharge operation amount of the plunger driving section **12q** for discharging a predetermined discharge amount, based on discharge operation amount data **D1** stored in the storage section **37,** using the average pressure value during sample suction, which is calculated by the calculation section **34** (step **S204).**

The discharge operation amount data **D1** is a correction between a discharge operation amount and an average pressure value during liquid suction, set for each desired discharge amount. The discharge operation amount data **D1** is obtained from the relationship between a discharge operation amount of the syringe pump **12s** when discharging blood cell samples having different viscosities, and an actual discharge amount, and the data **D1** is expressed by such a graph as illustrated in Figure **6.** The axis of abscissas refers to an average pressure value during sample suction (output average value of a pressure sensor), and the axis of ordinates refers to a discharge operation amount of the syringe pump **12s** output from the control section **31** to the plunger driving section **12q.** In Figure **6,** the line **11** refers to a relation of a blood cell discharge amount of 20 $\mu$L, and the line **12** refers to a relation of a blood cell discharge amount of 15 $\mu$L.

When a predetermined discharge amount of a blood cell sample is 20 $\mu$L, the correction section **38** refers to the line **L1** in Figure **6,** which is the relation of the discharge amount 20 $\mu$L, to correct the discharge operation amount of the syringe pump **12s.** For example, when a pressure sensor output average during blood cell sample suction is 0.4 V, the discharge operation amount of the syringe pump **12s** is corrected to 21.6 $\mu$L from the relation of the line **11;** and when the control section **31** drives the plunger driving section **12q,** using control signals corresponding to the discharge operation amount after the correction of 21.6 $\mu$L, 20 $\mu$L of a blood cell sample will be discharged. Similarly, when a pressure sensor output average during blood cell sample suction is 0.8 V, the discharge operation amount will be corrected to 25.3 $\mu$L. When a predetermined discharge amount of a blood cell sample is 15 $\mu$L, the correction section **38** refers to the line **12** in Figure **6,** which is the relation of the discharge amount 15 $\mu$L, to correct the discharge operation amount of the syringe pump **12s.** When a pressure sensor output average during blood cell sample suction is 0.4 V, the discharge operation amount of the syringe pump **12s** is corrected to 16.6 $\mu$L from the relation of the line **12.**

While Figure **6** illustrates only the relations of the blood cell discharge amounts of 20 $\mu$L (line **11)** and 15 $\mu$L (line **12),** relations in accordance with all the sample discharge amounts discharged by the analyzer **1** are stored as the discharge operation amount data **D1** in the storage section **37,** and the discharge operation amount is corrected from the pressure sensor output average value during blood cell sample suction in accordance with a discharge amount.

As described above, after the correction section **38** corrects a discharge operation amount of a predetermined discharge amount, the control section **31** sends control signals in accordance with the discharge operation amount after the correction, to the plunger driving section **12q,** allowing a predetermined amount of a blood cell sample to be discharged from the dispensing probe **12c** to the sample diluting section **18** (step **S205).** A diluent is dispensed into the sample diluting section **18** almost simultaneously with the discharging of the blood cell sample (step **S206),** and the dispensed sample and diluent are stirred by a stirring mechanism (step **S207)** to prepare a diluted sample. It is also noted that after the dispensing of the blood cell sample by the dispensing probe **12c** into the sample diluting section **18,** the disposal and washing off of the sample remaining inside the dispensing probe **12c** is performed within the dispensing probe washing section **19.**

Hereinafter, a method for obtaining the correlation between the average pressure value and discharge operation amount illustrated in Figure **6** will be briefly described.

First, a plurality of blood cell samples having different viscosities, i.e., different average pressure values during suction, are provided. For each sample, the dispensing of the sample is performed while the pressure during the suction is monitored. Here, while the suction amount of the sample is set to be an excess sample amount of 10 $\mu$L + a required sample amount of 20 $\mu$L = 30 $\mu$L, this 30 $\mu$L is a suction operation amount sent from the control section **31** to the plunger driving section **12q,** and the correction of the suction operation amount will not be performed. Thus, depending on the viscosity of the blood cell sample to be sucked, the actually sucked sample amount will be different.

With regard to the sucked sample, the discharge operation amount is varied and the discharging of the blood cell is performed into each test tube. A discharge test with a varied discharge operation amount is performed with a constant discharge rate (moving rate of the plunger **12o**). A predetermined amount (e.g., 1,000 $\mu$L) of a physiological

saline solution is added to the blood cell sample actually discharged into the test tube, and they are sufficiently stirred. Subsequently, the number of red blood cells (number/µL) and an average red blood cell volume (fL) are measured using a blood cell counter. From the measured data, the amount of actually discharged red blood cell is obtained using the formula below.

$$\texttt{Amount of discharged blood cell = the number of red blood}$$
$$\texttt{cells} \times \texttt{(average red blood cell volume} \times 10^{-9}\texttt{)} \times \texttt{amount of}$$
$$\texttt{added physiological saline solution / (1 - the number of}$$
$$\texttt{red blood cells} \times \texttt{(average red blood cell volume} \times 10^{-9}\texttt{))}$$
$$\texttt{.... (1)}$$

From the amount of red blood cells calculated using the formula (1) described above, the relationship between the amount of the actually discharged sample and the discharge operation amount is obtained. An example of the result is illustrated in Figure **7.** Figure **7** is a graph illustrating the relationship between a discharge operation amount and an actual discharge amount of a sample with an average pressure value of 0.8 V during the sample suction.

As illustrated in Figure **7,** in a case of a sample having such high viscosity that the average pressure value during the suction reaches 0.8 V, even if the discharge operation amount for 15 µL is sent to the plunger driving section **12q,** the amount of the actually discharged sample is 10 µL. In order to discharge 15 µL of a sample with an average pressure value during suction of 0.8 V from the dispensing probe **12c,** it is necessary to send a discharge operation amount that is greater than 15 µL to the plunger driving section **12q.** In order to discharge 15 µL of a sample with an average pressure value of 0.8 V, it can be understood that the discharge operation amount is corrected to be 20 µL (see Figure **7).**

The same sort of testing is performed on a plurality of samples having different viscosities, to obtain a relationship between discharge operation amounts and the amounts of the samples actually discharged. Based on the data obtained, the relationship between the suction pressure average and the discharge operation amount illustrated in Figure **6** is obtained.

In the present invention, based on a preprogrammed correlation (discharge operation amount data **D1**) between a discharge operation amount and a pressure average during sample suction, a correction for a discharge operation amount can be made for a desired amount to be discharged from a pressure average during sample suction, and the syringe pump can be controlled. Thus, regardless of individual differences (high or low viscosity) of the samples, a predetermined dispensing amount can be dispensed accurately. It is also possible to provide a pressure sensor in the reagent dispensing mechanism **14,** similarly to the sample dispensing mechanism **12,** to calculate an average pressure value during suction so that the discharge operation amount can be corrected and then dispensed based on the discharge operation amount data **D1** (different discharge operation amount data may also be provided for reagents). In such a case, accuracy in the dispensation can be maintained even in dispensing a reagent having high viscosity.

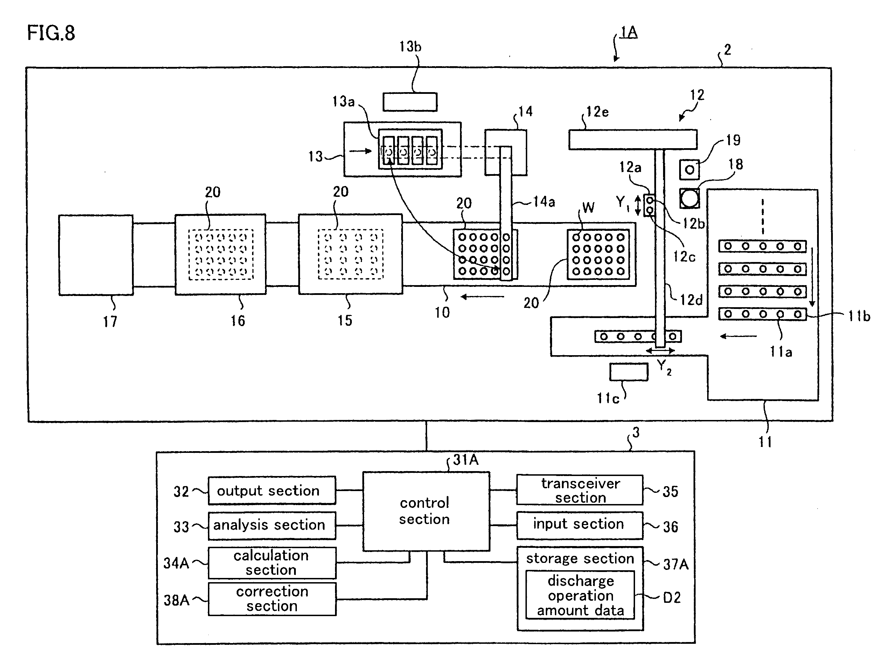

As a variation example of the embodiment according to the present invention described above, an analyzer **1A** illustrated in Figure **8** is exemplified. Figure **8** is a schematic view of the analyzer **1A.** The analyzer **1A** performs analysis as follows: a calculation section **34A** calculates a pressure integral value from pressure data during sample suction measured by a pressure sensor **12f;** a correction section **38A** corrects a discharge operation amount from the pressure integral value, based on discharge operation amount data **D2** stored in a storage section **37A;** and a control section **31A** sends control signals in accordance with the corrected discharge operation amount, to a sample dispensing mechanism **12,** so that a predetermined amount of a sample is discharged.

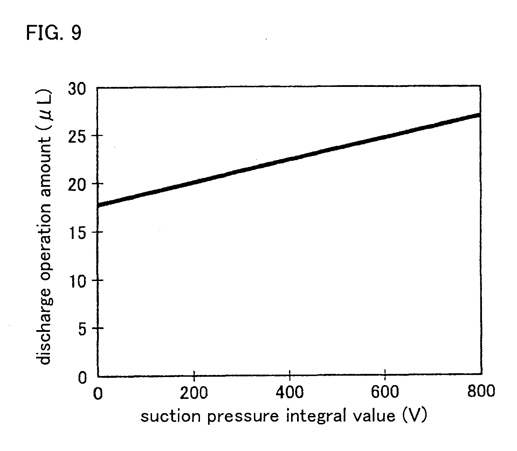

The discharge operation amount data **D2** stored in the storage section **37A** is stored as a correlation between a discharge operation amount and a suction pressure integral value as illustrated in Figure **9.** Figure **9** is a graph illustrating a relationship between a discharge operation amount and a suction pressure integral value in the variation example of the embodiment according to the present invention. The analyzer **1A** is also capable of accurately dispensing a predetermined dispensing amount regardless of individual differences (high or low viscosity) of samples.

A control program for controlling the processing executed by the analyzer **1** is installed in the storage section **37** or storage section **37A** of the control mechanism **3** illustrated in Figure **1** or **7.** In general, installation of such a control program in a memory of a computer allows the computer to function as part or all of the control mechanism **3** (Figure **1** or **7).** Such a control program may be installed in a memory prior to shipping of the computer, or may be installed in the memory after the shipping of the computer. The program may be installed in the memory of the computer by reading the program stored in a recording medium. Alternatively, a program downloaded through a network, such as the Internet, maybe installed in the memory of the computer. For the computer, any type of computer may be used.

Once the control program is installed in the computer, the computer functions as part or all of the control mechanism **3** (Figure **1** or **7).** In this case, the control mechanism **3** (Figure **1** or **7)** being in operation means a controlling method corresponding to the installed control program is executed. This is because the controlling method corresponds to a method for operating the control mechanisms.

As described above, the present invention is exemplified by the use of its preferred embodiment. However, the present invention should not be interpreted solely based on the embodiment described above. It is understood that the scope of the present invention should be interpreted solely based on the claims. It is also understood that those skilled in the art can implement equivalent scope of technology, based on the description of the present invention and common knowledge from the description of the detailed preferred embodiment of the present invention. Furthermore, it is understood that any patent, any patent application and any references cited in the present specification should be incorporated by reference in the present specification in the same manner as the contents are specifically described therein.

The present application claims priority to Japanese Patent Application No. 2009-235626, and it is understood that the entire contents of which are incorporated by reference herein as a part constituting the present specification in the same manner as the contents are specifically described in the present specification.

INDUSTRIAL APPLICABILITY

As described above, the dispenser, analyzer and dispensing method according to the present invention are useful for an analyzer with a blood cell sample or a whole blood sample as an analysis subj ect, and they are particularly suitable in the field in which accuracy in analysis is required.

[Reference Signs List]

| | |
|---|---|
| **1, 1A** | analyzer |
| **2** | measurement mechanism |
| **3** | control mechanism |
| **10** | plate conveying lane |
| **11** | sample transfer section |
| **11a** | sample container |
| **11b** | sample rack |
| **11c** | sample reading section |
| **12** | sample dispensing mechanism |
| **12a** | probe retaining section |
| **12b, 12c** | dispensing probe |
| **12d** | arm |
| **12e** | arm retaining section |
| **13** | reagent transfer section |
| **13a** | reagent set |
| **13b** | reagent reading section |
| **14** | reagent dispensing mechanism |
| **15** | reaction promoting section |
| **16** | photometry section |
| **17** | plate collecting section |
| **18** | sample diluting section |
| **19** | probe washing section |
| **20** | microplate |
| **31, 31A** | control section |
| **32** | output section |
| **33** | analysis section |
| **34, 34A** | calculation section |
| **35** | transceiver section |
| **36** | input section |
| **37, 37A** | storage section |
| **38, 38A** | correction section |
| **L1** | pressurized-out water |
| **D1, D2** | discharge operation amount data |
| **W** | well |

**Claims**

1. A dispenser of a liquid including a sample or a reagent, the dispenser comprising:

   pressure generating means for applying suction pressure or discharge pressure through pressurized-out water filled in a pipe connected with a dispensing probe;
   a dispensing probe for sucking and discharging a liquid including a sample or a reagent;
   pressure measuring means for measuring pressure within the pipe during liquid suction by the dispensing probe;
   calculating means for calculating an average pressure value during liquid suction measured by the pressure measuring means;
   storage means for storing a correlation between an average pressure value and a discharge operation amount during liquid suction, set for each predetermined discharge amount;
   correction means for correcting a discharge operation amount of the pressure generating means, based on a correlation stored in the storage means, using the average pressure value during suction calculated by the calculating means; and
   control means for controlling the pressure generating means to allow a predetermined discharge amount to be discharged from the dispensing probe, based on the discharge operation amount corrected by the correction means.

2. A dispenser of a liquid including a sample or a reagent, the dispenser comprising:

   pressure generating means for applying suction pressure or discharge pressure through pressurized-out water filled in a pipe connected with a dispensing probe;
   a dispensing probe for sucking and discharging a liquid including a sample or a reagent;
   pressure measuring means for measuring pressure within the pipe during liquid suction by the dispensing probe;
   calculating means for calculating a pressure integral value during liquid suction measured by the pressure measuring means;
   storage means for storing a correlation between a pressure integral value and a discharge operation amount during liquid suction, set for each predetermined discharge amount;
   correction means for correcting a discharge operation amount of the pressure generating means, based on a correlation stored in the storage means, using the pressure integral value during suction calculated by the calculating means; and
   control means for controlling the pressure generating means to discharge a predetermined discharge amount from the dispensing probe, based on the discharge operation amount corrected by the correction means.

3. The dispenser according to claim 1 or 2, wherein the pressure generating means is a syringe pump.

4. The dispenser according to claim 1 or 2, wherein liquid discharging by the dispensing probe is performed at a predetermined discharging rate.

5. The dispenser according to claim 1 or 2, wherein the sample is a blood cell sample or a whole blood sample.

6. An analyzer for analyzing a reactant of a sample and a reagent based on optical measurement, comprising:

   the dispenser according to claim 1 or 2; and
   measurement means for optically measuring the reactant of the sample and the reagent.

7. A dispensing method for a dispenser that applies suction pressure or discharge pressure by pressure generating means through pressurized-out water filled within a pipe connected to a dispensing probe, sucks and discharges a liquid including a sample or a reagent by the dispensing probe, the method comprising:

   a pressure measuring step of measuring pressure within the pipe during liquid suction by the dispensing probe;
   a calculating step of calculating an average pressure value during liquid suction measured at the pressure measuring step;
   a correcting step of correcting a discharge operation amount of the pressure generating means, using the average pressure value during suction calculated at the calculating step, based on a correlation between an average pressure value and a discharge operation amount, set for each predetermined discharge amount, stored in storage means; and

a discharge step of controlling the pressure generating means and allowing a predetermined discharge amount to be discharged from the dispensing probe, based on the discharge operation amount corrected at the correcting step.

8. A dispensing method for a dispenser that applies suction pressure or discharge pressure by pressure generating means through pressurized-out water filled within a pipe connected to a dispensing probe, and sucks and discharges a liquid including a sample or a reagent by the dispensing probe, the method comprising:

a pressure measuring step of measuring pressure within the pipe during liquid suction by the dispensing probe;
a calculating step of calculating a pressure integral value during liquid suction measured at the pressure measuring step;
a correcting step of correcting a discharge operation amount of the pressure generating means, using the pressure integral value during suction calculated at the calculating step, based on a correlation between a pressure integral value and a discharge operation amount, set for each predetermined discharge amount, stored in storage means; and
a discharge step of controlling the pressure generating means and allowing a predetermined discharge amount to be discharged from the dispensing probe, based on the discharge operation amount corrected at the correcting step.

9. A control program used in a dispensing method for a dispenser that appliessuction pressure or discharge pressure by pressure generating means through pressurized-out water filled within a pipe connected to a dispensing probe, and sucks and discharges a liquid including a sample or a reagent by the dispensing probe, the control program being for implementing processing executed by the dispenser in accordance with an instruction from an operator, the dispenser comprising a storage section that stores a plurality of sets of a series of executive processing procedures executed by the dispenser, and each plurality of sets of a series of executive processing procedures corresponding to a series of operation procedures by the operator, the dispensing method comprising:

a pressure measuring step of measuring pressure within the pipe during liquid suction by the dispensing probe;
a calculating step of calculating an average pressure value during liquid suction measured at the pressure measuring step;
a correcting step of correcting a discharge operation amount of the pressure generating means, using the average pressure value during suction calculated at the calculating step, based on a correlation between an average pressure value and a discharge operation amount, set for each predetermined discharge amount, stored in storage means; and
a discharge step of controlling the pressure generating means and allowing a predetermined discharge amount to be discharged from the dispensing probe, based on the discharge operation amount corrected at the correcting step.

10. A control program used in a dispensing method for a dispenser that applies suctionpressure or discharge pressure by pressure generating means through pressurized-out water filled within a pipe connected to a dispensing probe, and sucks and discharges a liquid including a sample or a reagent by the dispensing probe, the control program being for implementing processing executed by the dispenser in accordance with an instruction from an operator, the dispenser comprising a storage section that stores a plurality of sets of a series of executive processing procedures executed by the dispenser, and each plurality of sets of a series of executive processing procedures corresponding to a series of operation procedures by the operator, the dispensing method comprising:

a pressure measuring step of measuring pressure within the pipe during liquid suction by the dispensing probe;
a calculating step of calculating a pressure integral value during liquid suction measured at the pressure measuring step;
a correcting step of correcting a discharge operation amount of the pressure generating means using the pressure integral value during suction calculated at the calculating step, based on a correlation between a pressure integral value and a discharge operation amount, set for each predetermined discharge amount, stored in storage means; and
a discharge step of controlling the pressure generating means and allowing a predetermined discharge amount to be discharged from the dispensing probe, based on the discharge operation amount corrected at the correcting step.

11. A computer-readable recording medium for recording a control program used in a dispensing method for a dispenser that applies suction pressure or discharge pressure by pressure generating means through pressurized-out water filled within a pipe connected to a dispensing probe, and sucks and discharges a liquid including a sample or a reagent by the dispensing probe, the control program being for implementing processing executed by the dispenser in accordance with an instruction from an operator, the dispenser comprising a storage section that stores a plurality of sets of a series of executive processing procedures executed by the dispenser, and each plurality of sets of a series of executive processing procedures corresponding to a series of operation procedures by the operator, the dispensing method comprising:

a pressure measuring step of measuring pressure within the pipe during liquid suction by the dispensing probe;
a calculating step of calculating an average pressure value during liquid suction measured at the pressure measuring step;
a correcting step of correcting a discharge operation amount of the pressure generating means, using the average pressure value during suction calculated at the calculating step, based on a correlation between an average pressure value and a discharge operation amount, set for each predetermined discharge amount, stored in storage means; and
a discharge step of controlling the pressure generating means and allowing a predetermined discharge amount to be discharged from the dispensing probe, based on the discharge operation amount corrected at the correcting step.

**12.** A computer-readable recording medium for recording a control program used in a dispensing method for a dispenser that applies suction pressure or discharge pressure by pressure generating means through pressurized-out water filled within a pipe connected to a dispensing probe, and sucks and discharges a liquid including a sample or a reagent by the dispensing probe, the control program being for implementing processing executed by the dispenser in accordance with an instruction from an operator, the dispenser comprising a storage section that stores a plurality of sets of a series of executive processing procedures executed by the dispenser, and each plurality of sets of a series of executive processing procedures corresponding to a series of operation procedures by the operator, the dispensing method comprising:

a pressure measuring step of measuring pressure within the pipe during liquid suction by the dispensing probe;
a calculating step of calculating a pressure integral value during liquid suction measured at the pressure measuring step;
a correcting step of correcting a discharge operation amount of the pressure generating means using the pressure integral value during suction calculated at the calculating step, based on a correlation between a pressure integral value and a discharge operation amount, set for each predetermined discharge amount, stored in storage means; and
a discharge step of controlling the pressure generating means and allowing a predetermined discharge amount to be discharged from the dispensing probe, based on the discharge operation amount corrected at the correcting step.

FIG.1

FIG. 2

FIG. 3

```
                    ┌─────────────┐
                    │    start    │
                    └──────┬──────┘
                           ↓
          ┌────────────────────────────────┐
          │   reading sample information    │ ～S101
          └────────────────┬───────────────┘
                           ↓      ⌠S102
                   ╱─────────────────╲          No
                  ╱   analysis of      ╲──────────────┐
                  ╲  blood cell sample? ╱              │
                   ╲─────────────────╱                │
                           ↓ Yes    ⌠S103             │
          ┌────────────────────────────────┐          │
          │      preparing diluted sample   │          │
          └────────────────┬───────────────┘          │
                           ↓         ⌠S104             │
          ┌────────────────────────────────┐          │
          │     dispensing diluted sample   │          │
          └────────────────┬───────────────┘          │
                           ↓         ⌠S105             │
          ┌────────────────────────────────┐          │
          │        dispensing reagent       │          │
          └────────────────┬───────────────┘          │
                           ↓         ⌠S106             │
          ┌────────────────────────────────┐          │
          │           incubation            │          │
          └────────────────┬───────────────┘          │
                           ↓         ⌠S107             │
          ┌────────────────────────────────┐          │
          │           measuring             │          │
          └────────────────┬───────────────┘          │
                           ↓←───────────────────────────┘
                    ┌─────────────┐
                    │     end     │
                    └─────────────┘
```

FIG. 4

```
        ┌──────────────────┐
        │ preparing diluted │
        │     sample        │
        └──────────────────┘
                 │
                 ▼
  ┌────────────────────────────────┐
  │ sucking predetermined amount   │───S201
  │     of blood cell sample       │
  └────────────────────────────────┘
                 │
                 ▼
  ┌────────────────────────────────┐
  │ measuring pressure during      │───S202
  │           suction              │
  └────────────────────────────────┘
                 │
                 ▼
  ┌────────────────────────────────┐
  │ calculating average pressure   │───S203
  │            value               │
  └────────────────────────────────┘
                 │
                 ▼
  ┌────────────────────────────────┐
  │   correcting discharge         │───S204
  │    operation amount            │
  └────────────────────────────────┘
                 │
                 ▼
  ┌────────────────────────────────┐
  │  discharging blood cell sample │───S205
  └────────────────────────────────┘
                 │
                 ▼
  ┌────────────────────────────────┐
  │      dispensing diluent        │───S206
  └────────────────────────────────┘
                 │
                 ▼
  ┌────────────────────────────────┐
  │           stirring             │───S207
  └────────────────────────────────┘
                 │
                 ▼
        ┌──────────────────┐
        │      return       │
        └──────────────────┘
```

FIG. 5

FIG. 6

FIG. 7

EP 2 487 491 A1

FIG.8

| | | |
|---|---|---|
| 32 | output section | |
| 33 | analysis section | |
| 34A | calculation section | |
| 38A | correction section | |

31A

control section

transceiver section ~35

input section ~36

storage section ~37A

discharge operation amount data ~D2

FIG. 9

**INTERNATIONAL SEARCH REPORT**

| International application No. |
| --- |
| PCT/JP2010/005998 |

A. CLASSIFICATION OF SUBJECT MATTER
*G01N35/10*(2006.01)i, *G01N1/00*(2006.01)i

According to International Patent Classification (IPC) or to both national classification and IPC

B. FIELDS SEARCHED

Minimum documentation searched (classification system followed by classification symbols)
G01N35/10, G01N1/00

Documentation searched other than minimum documentation to the extent that such documents are included in the fields searched
Jitsuyo Shinan Koho      1922-1996   Jitsuyo Shinan Toroku Koho   1996-2010
Kokai Jitsuyo Shinan Koho  1971-2010   Toroku Jitsuyo Shinan Koho   1994-2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2008-246363 A  (the Doshisha),<br>16 October 2008 (16.10.2008),<br>paragraphs [0037] to [0060], [0094]; fig. 5<br>(Family: none) | 1-12 |
| A | JP 2006-250832 A  (the Doshisha),<br>21 September 2006 (21.09.2006),<br>paragraphs [0013] to [0041], [0051]<br>(Family: none) | 1-12 |
| A | JP 2003-287545 A  (Olympus Optical Co., Ltd.),<br>10 October 2003 (10.10.2003),<br>paragraph [0010]; fig. 1<br>(Family: none) | 1-12 |

☒ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>20 December, 2010 (20.12.10) | Date of mailing of the international search report<br>11 January, 2011 (11.01.11) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/005998

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2005-283185 A (Iwashita Engineering Inc.), 13 October 2005 (13.10.2005), paragraphs [0010] to [0020] (Family: none) | 1-12 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005291998 A

- JP 2009235626 A